# EUROPÄISCHE PATENTSCHRIFT

(11) **EP 4 464 912 B1**
(45) Veröffentlichungstag und Bekanntmachung des Hinweises auf die Patenterteilung: **17.12.2025**
(21) Anmeldenummer: 24170793.4
(22) Anmeldetag: 17.04.2024
(51) Int. Cl.: F16D 65/12, F16D 65/18

(54) **BREMSMODUL**
BRAKING MODULE
MODULE DE FREINAGE

(30) Priorität: 26.04.2023 DE 202023102252 U
(43) Veröffentlichungstag der Anmeldung: 20.11.2024
(73) Patentinhaber: STABILUS GmbH, 56070 Koblenz (DE)
(72) Erfinder: BURBULLA, David, 56072 Koblenz (DE); HÜMMERICH, Magnus, 56269 Dierdorf (DE)
(74) Vertreter: Forresters IP LLP

(56) Entgegenhaltungen:
- WO-A1-2019/057298
- CN-A- 101 317 316
- US-A- 6 146 727
- US-B2- 11 248 405

## Beschreibung

Die vorliegende Erfindung betrifft ein Bremsmodul für ein Antriebssystem, insbesondere für Fahrzeugklappen, umfassend mindestens eine Anlaufscheibe und mindestens eine Bremsscheibe, wobei die mindestens eine Anlaufscheibe und die mindestens eine Bremsscheibe jeweils mindestens eine Reibfläche aufweisen, die im Bremsbetrieb aneinander reiben.

In Antriebssystemen, insbesondere in Spindelantrieben, welche für Fahrzeugtüren eingesetzt werden, ist es notwendig, ein Lastmoment aufzubringen, um den Kraftverlauf beim Aus- und Einfahren der Spindel zu optimieren. Dies ermöglicht einerseits ein Halten einer Fahrzeugtür und andererseits eine gleichmäßige Bewegung des Antriebssystems. Ebenso können Beschädigungen durch zu hohe Kräfte durch die Gewichtskraft der Fahrzeugtüre oder durch eine zu hohe Handkraft des Benutzers vermieden werden. Aus dem Stand der Technik sind daher unterschiedliche Bremssysteme bekannt. Beispielhaft sind eine Scheibenbremse mit Reibpartnern, eine schaltbare bestromte Bremse aus Elektromagneten mit Reibpartnern oder eine nicht schaltbare Hysteresebremse aus 2 Permanentmagneten zu nennen. Die bekannten Bremssysteme weisen jedoch einige Nachteile wie Geräusche, erhöhter Verschleiß und Temperaturabhängigkeit auf.

Aus der WO2019/057298A1 ist eine Bremsschreibe für einen elektrisch angetriebenen Kupplungsaktuator bekannt. Die Bremsscheibe wirkt mit einem Gegenstück aus Stahl als Reibpartner zusammen und umfasst einen Bremsscheibenkörper, welcher aus Kunststoff ausgebildet ist und Aussparungen mit darin positionierten, ebenfalls aus Kunststoff ausgebildeten Einsätzen aufweist. Der Bremsscheibenkörper und die Einsätze weisen mit dem Gegenstück unterschiedliche Reibwerte auf, wobei der Reibwert der Einsätze geringer ist als ein Reibwert des Bremsscheibenkörpers, so dass sich ein Abrieb der Einsätze über die Reibungsfläche des Bremsscheibenkörpers verteilt, um den Gesamtreibwert zu reduzieren und damit die Lebensdauer zu der Bremsscheibe zu erhöhen.

Die vorliegende Erfindung stellt sich daher die Aufgabe, ein Bremsmodul für ein Antriebssystem bereitzustellen, welches die Nachteile der bekannten Systeme umgehen kann, einfach ausgestaltet und zudem kostengünstig ohne Nachteile hinsichtlich der Bremskraft ausgestaltet ist.

Der Gegenstand der vorliegenden Erfindung stellt ein Bremsmodul für ein Antriebssystem bereit, das diese Aufgabe erfindungsgemäß entsprechend den Merkmalen des Anspruches 1 löst. Ebenso wird die Aufgabe durch ein Antriebssystem gemäß den Merkmalen des Anspruchs 6 gelöst. Vorteilhafte Ausgestaltungen ergeben sich aus den abhängigen Ansprüchen.

Ein erfindungsgemäßes Bremsmodul für ein Antriebssystem, insbesondere für Fahrzeugklappen, weist mindestens eine Anlaufscheibe und mindestens eine Bremsscheibe auf, wobei die mindestens eine Anlaufscheibe und die mindestens eine Bremsscheibe jeweils mindestens eine Reibfläche aufweisen, die im Bremsbetrieb aneinander reiben, gelöst. Erfindungsgemäß ist die Bremsscheibe einteilig aus einem Kunststoff ausgebildet und weist in der mindestens einen Reibfläche eine Anzahl von Vertiefungen zur Aufnahme eines Schmiermittels auf.

Unter dem Begriff Fahrzeugklappe wird im Sinne der Erfindung ein Bauteil zum mindestens teilweise Verschließen einer Öffnung eines Fahrzeuges verstanden. Insbesondere kann die Fahrzeugklappe eine Fahrzeugtür, eine Motorhaube, eine Gepäckraumklappe, eine Laderaumtür oder eine Heckklappe sein. Ebenso ist die Verwendung des Bremsmoduls für ein Gerät oder ein Bauwerk denkbar.

Die erfindungsgemäße Lösung stellt eine optimierte Kombination der Reibpartner vor, welche einen einfachen Aufbau bietet und besonders kostengünstig ist. Durch die Vertiefungen zur Aufnahme des Schmiermittels ist es zudem möglich, die Verschleißbeständigkeit und das Geräuschverhalten zu optimieren.

Durch die Einteiligkeit der Bremsscheibe entfällt eine aufwendige und kostenintensive Beschichtung mit einer oder mehreren Reibschichten. Die Kunststoff-Bremsscheibe weist zudem ein geringes Gewicht auf und ist lagerungsunempfindlich.

Die Vertiefungen dienen als Reservoir für ein auf die Reibpartner abgestimmtes Schmiermittel und erhöhen damit die Lebensdauer des Bremsmoduls, ohne dass große Mengen des Schmiermittels notwendig sind.

Das Bremsmodul umfasst je eine Anlaufscheibe auf zwei gegenüberliegenden Seiten der Bremsscheibe, wobei die Bremsscheibe je eine jeder der Anlaufscheiben zugewandte Reibfläche mit je einer erfindungsgemäßen Reibschicht. Durch die Verwendung von zwei Anlaufscheiben auf beiden Seiten der Bremsscheibe lässt sich eine höhere Lebensdauer und höhere Bremskraft erzielen, ohne die Abmessungen des Bremsmoduls wesentlich zu erhöhen.

Mindestens eine Anlaufscheibe kann aus Stahl, insbesondere aus, vorzugsweise nicht-nitriertem Chrom- 5 -Stahl, bestehen. Es hat sich herausgestellt, dass eine Anlaufscheibe aus nicht-nitriertem Chrom- 5 -Stahl zwar eine geringere Lebensdauer aufweist als eine Anlaufscheibe aus nitriertem Chrom-5-Stahl, sich die Vibrations- und Geräuschentwicklung bei Reibung mit einer Bremsscheibe aus faserverstärktem Kunststoff aber deutlich gegenüber nitriertem Chrom- 5 -Stahl verringert. Ein solches erfindungsgemäßes Bremsmodul mit Anlaufscheibe(n) aus nicht-nitriertem Chrom- 5 -Stahl weist insgesamt dennoch eine vergleichbare oder sogar höhere Lebensdauer als ein Bremsmodul des Standes der Technik auf.

Die Bremsscheibe kann ringförmig sein und insbesondere eine zentrale Ausnehmung aufweisen, wobei die zentrale Ausnehmung vorzugsweise näherungsweise kreisförmig ist, insbesondere mit mindestens zwei durch eine Anzahl von, beispielsweise einer, zwei, drei, vier, fünf, sechs oder sieben, Aussparungen voneinander getrennten Zahnabschnitten, wobei die Zahnabschnitte vorzugsweise radial nach innen vorspringende Zähne umfassen. Eine solche Ausgestaltung erlaubt eine flexiblere Verbindung der Bremsscheibe, beispielsweise mit einer Antriebswelle, insbesondere einer Gewindespindel des Antriebssystems. Somit ist es auch leichter, das Bremsmodul erst spät in einem Produktionsprozess eines Antriebssystems zu installieren und Vibrationsschäden bei der Montage zu vermeiden bzw. es zu entfernen, falls das Bremsmodul defekt ist. Ein näherungsweise kreisförmiger Querschnitt der Ausnehmung kann beispielsweise bedeuten, dass der Querschnitt bis auf die radial nach innen vorstehenden Zahnabschnitte kreisförmig ist. Die Aussparungen sind vorteilhafterweise in Umfangsrichtung der Bremsscheibe gleichmäßig, also mit konstantem Winkelabstand voneinander, um die Ausnehmung verteilt, um eine gleichmäßige Belastung der Bremsscheibe und somit eine hohe Lebensdauer derselben sicherzustellen.

Das Bremsmodul kann ein Gehäuse umfassen, in dem die Bremsscheibe und die mindestens eine Anlaufscheibe, vorzugsweise koaxial um eine zentrale Achse, insbesondere die Längsachse des Antriebssystems, insbesondere einer Gewindespindel, des Antriebssystems, geführt sind, wobei das Bremsmodul vorzugsweise eine Deckscheibe umfasst, die, vorzugsweise durch eine Rastverbindung, mit dem Gehäuse derart verbunden ist, dass die Bremsscheibe und die mindestens eine Anlaufscheibe im Gehäuse gehalten sind. Die Deckscheibe kann beispielsweise Rastausnehmungen aufweisen, in die Rasthaken des Gehäuses eingreifen können. Vorteilhafterweise kann die Rastverbindung so ausgestaltet sein, dass die Deckscheibe nicht zerstörungsfrei von dem Gehäuse getrennt werden kann. Dadurch werden in dem Gehäuse angeordnete Komponenten vor Manipulationen geschützt.

Vorzugsweise ist der Aufbau des Bremsmoduls entlang der Längsachse: Feder, Anlaufscheibe, Bremsscheibe, Anlaufscheibe, Deckscheibe. Vorzugsweise sind diese Komponenten alle zumindest teilweise vom Gehäuse umgeben. Damit lässt sich eine einfache Montage des Bremsmoduls im Antriebssystem erreichen, ohne dass die Gefahr besteht, einen Teil des Bremsmoduls zu verlieren.

Das Gehäuse kann eine Anzahl von Gehäuseschlitzen umfassen, deren Schlitzlängsachse vorteilhafterweise parallel zu der Längsachse des Antriebssystems ausgerichtet ist. Ferner kann zumindest eine Anlaufscheibe radial von der Längsachse nach außen gerichtete Anlaufscheibenvorsprünge aufweisen, die komplementär zu den Gehäuseschlitzen geformt sind, sodass die Gehäuseschlitze und die Anlaufscheibenvorsprünge gegen eine Verdrehung der Anlaufscheibe gegenüber dem Gehäuse um die Längsachse formschlüssig zusammenwirken. Dadurch wird verhindert, dass sich die Anlaufscheibe bei einem Bremsvorgang mit der Bremsscheibe mit dreht, was die Bremswirkung verringern oder sogar aufheben könnte. Durch eine Ausrichtung der Schlitzlängsachse parallel zu der Längsachse des Antriebssystems kann die Anlaufscheibe bei einer Montage des Bremsmoduls einfach entlang der Längsachse in das Gehäuse eingeführt werden. Vorteilhafterweise sind die Gehäuseschlitze in Umfangsrichtung des Gehäuses um die Längsachse gleichmäßig, also mit kontantem Winkelabstand voneinander, verteilt. Dadurch wird das Gehäuse gleichmäßig belastet, was seine Lebensdauer erhöht.

Die erfindungsgemäße Aufgabe wird auch durch ein Antriebssystem, insbesondere für eine Fahrzeugklappe, umfassend ein Bremsmodul nach einer der vorstehenden Ausführungsformen gelöst.

Die vorliegende Erfindung wird im Folgenden anhand eines Ausführungsbeispiels beschrieben. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es stellt dar:
- Figur 1: eine räumliche Darstellung eines erfindungsgemäßen Bremsmoduls;
- Figur 2: eine Explosionsdarstellung des Bremsmoduls aus Figur 1;

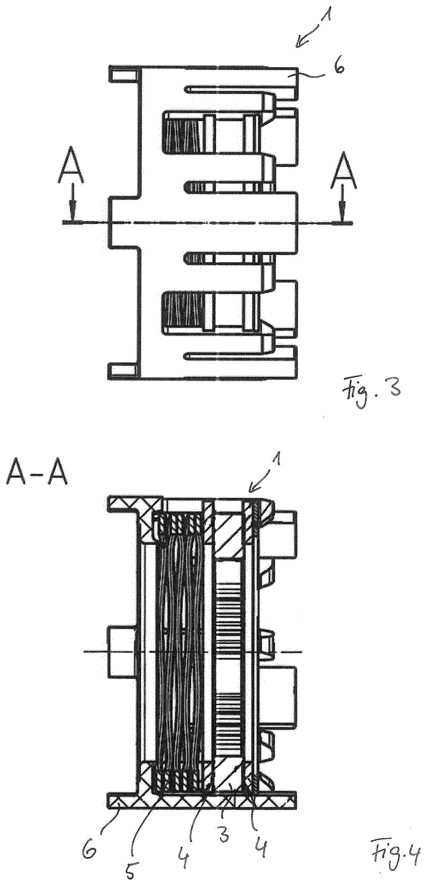

- Figur 3: eine Seitendarstellung des Bremsmoduls aus Figur 1;
- Figur 4: einen Querschnitt A-A des Bremsmoduls aus Figur 3;
- Figur 5: eine vergrößerte räumliche Darstellung einer Bremsscheibe des Bremsmoduls aus Figur 1 und
- Figur 6: einen weiteren Querschnitt des Bremsmoduls aus Figur 3 mit einem Mitnehmer des Antriebssystems.

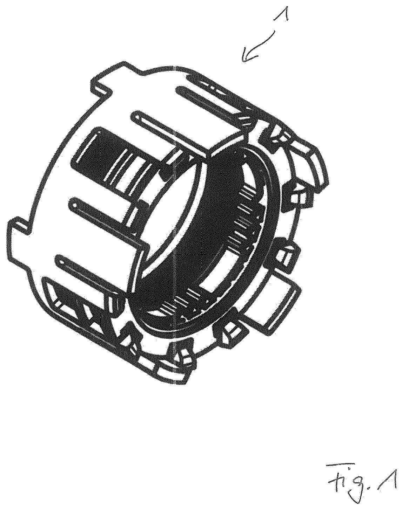

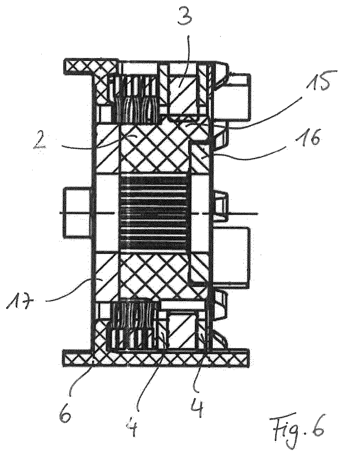

In Figur 1 ist ein erfindungsgemäßes Bremsmodul 1 in räumlicher Darstellung gezeigt. Das Bremsmodul 1 ist beispielsweise über einen in Figur 6 gezeigten Mitnehmer 2 mit einer nicht gezeigten Spindel eines Antriebssystems verbunden. Das Antriebssystem kann ein elektrischer Spindelantrieb sein, welcher beispielsweise aus der EP 1 767 439 A2 bekannt ist. Die Spindel wird durch eine als Elektromotor ausgeführte Antriebseinheit rotatorisch angetrieben, wodurch Befestigungselemente des Spindelantriebs zueinander bewegbar sind, um z.B. eine Fahrzeugklappe zu öffnen oder zu schließen.

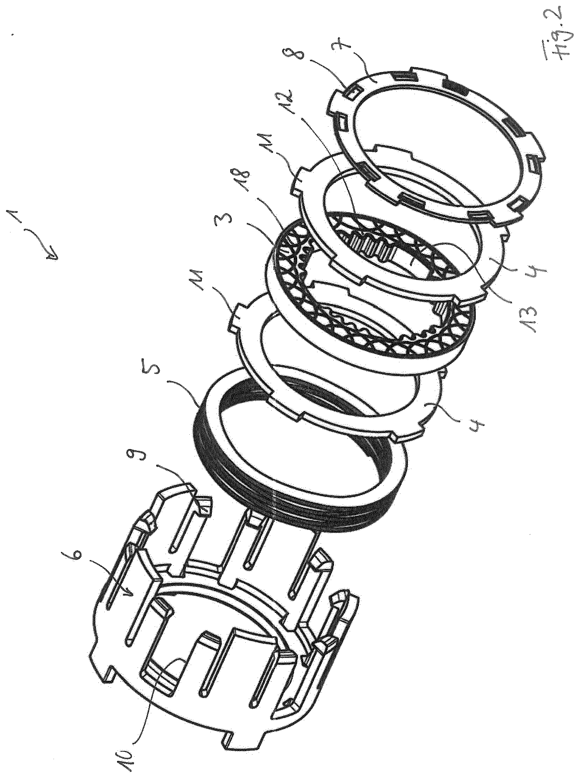

Figur 2 zeigt das Bremsmodul 1 der Figur 1 in Explosionsdarstellung. Die Bremsscheibe 3 umfasst mindestens zwei Reibflächen, die an angrenzenden Reibflächen von zwei Anlaufscheiben 4 im Bremsbetrieb infolge relativer Rotation der Bremsscheibe 3 gegenüber den Anlaufscheiben 4 um eine Längsachse der Spindel bzw. des Antriebssystems reiben. Dadurch wird ein Bremsdrehmoment auf die Spindel des Antriebssystems ausgeübt. Eine Feder 5 übt eine Federkraft entlang der Längsachse auf eine der Anlaufscheiben 4 aus, wodurch die Bremsscheibe 3 und die Anlaufscheiben 4 aneinander angepresst werden, um sie im Reibkontakt zu halten. Die Stärke der Federkraft ist ein Parameter, über den sich die Größe der Bremskraft festlegen lässt. In dieser Ausführungsform ist die Feder 5 eine Wellenfeder.

Die Bremsscheibe 3, die Anlaufscheiben 4, die Feder 5 sowie eine Deckscheibe 7 sind in einem Gehäuse 6 koaxial um die Längsachse geführt angeordnet. Das Gehäuse 8 ist durch eine Rastverbindung mit der Deckscheibe 7 verbunden, wodurch die Bremsscheibe 3, die zwei Anlaufscheiben 4 und die Feder 5 im Gehäuse 6 gehalten werden. Die Deckscheibe 7 weist dabei Rastausnehmungen 8 auf, in Rasthaken 9 des Gehäuses 8 eingreifen können. Der Aufbau des Bremsmoduls entlang der Längsachse ist somit: Feder 5, Anlaufscheibe 4, Bremsscheibe 3, Anlaufscheibe 4, Deckscheibe 7. Diese Komponenten sind alle im zusammengesetzten Zustand zumindest teilweise vom Gehäuse 6 umgeben. Damit lässt sich eine einfache Montage des Bremsmoduls 1 im Antriebssystem erreichen, ohne dass die Gefahr besteht, einen Teil des Bremsmoduls 1 zu verlieren.

Das Gehäuse 6 umfasst weiterhin eine Anzahl von, beispielsweise fünf, um die Längsachse in Umfangsrichtung des Gehäuses 6 gleichmäßig verteilte Gehäuseschlitzen 10 mit einer Schlitzlängsachse parallel zu der Längsachse. In die Gehäuseschlitze 10 greifen radial von der Längsachse nach außen gerichtete Anlaufscheibenvorsprünge 11 der Anlaufscheiben 4 ein. Dadurch wird eine relative Rotation des Gehäuses 6 und der Anlaufscheiben 4 gegeneinander um die Längsachse verhindert, wenn sich die Bremsscheibe 3 mit der Spindel dreht und im Bremsbetrieb an den Anlaufscheiben 4 reibt.

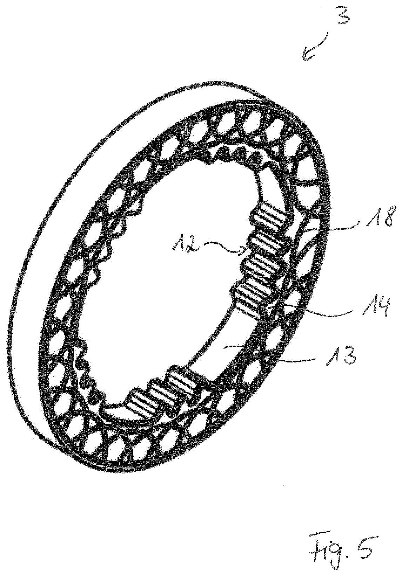

Die Bremsscheibe 3 ist ringförmig und weist eine zentrale Ausnehmung auf. Die zentrale Ausnehmung hat einen näherungsweise kreisförmigen Querschnitt mit mindestens zwei, beispielsweise vier, in Umfangsrichtung der Bremsscheibe 3 um die Längsachse gleichmäßig verteilten Zahnabschnitten 12, die durch Aussparungen 13 voneinander getrennt sind. Die Ausbildung der Bremsscheibe 3 wird insbesondere aus Figur 5 ersichtlich, welche eine vergrößerte Darstellung der Bremsscheibe 3 zeigt. Die Zahnabschnitte 12 umfassen radial nach innen vorspringende Zähne 14. Eine solche Ausgestaltung erlaubt eine flexible Verbindung der Bremsscheibe 3 über den in Figur 6 gezeigten Mitnehmer 2 mit der Spindel des Antriebssystems. Der Mitnehmer 2 umfasst Flügel 15, die in die Aussparungen 13 der Bremsscheibe 3 eingreifen. Die Übertragung des Drehmoments zwischen dem Mitnehmer 2 und der Bremsscheibe 3 erfolgt über den Kontakt zwischen den Flügeln 15 und den Zähnen 14.

Wie insbesondere Figur 5 zu entnehmen ist, weisen die Reibflächen der Bremsscheibe eine Anzahl von Vertiefungen 18 zur Aufnahme eines Schmiermittels auf, durch welche es möglich, die Verschleißbeständigkeit und das Geräuschverhalten zu optimieren. Die Vertiefungen 18 sind als überlappende, radial nach außen geöffnete Kreissegmente ausgebildet. Diese Geometrie ermöglicht, dass möglichst viel Schmierstoff möglichst lange in Reibkontakt bleibt.

Durch die Einteiligkeit der Bremsscheibe entfällt eine aufwendige und kostenintensive Beschichtung mit einer oder mehreren Reibschichten. Die Kunststoff-Bremsscheibe weist zudem ein geringes Gewicht auf und ist lagerungsunempfindlich.

Die Vertiefungen dienen als Reservoir für ein auf die Reibpartner abgestimmtes Schmiermittel und erhöhen damit die Lebensdauer des Bremsmoduls, ohne dass große Mengen des Schmiermittels notwendig sind.

Weitere, in Figur 6 gezeigte Scheibenelemente 16, 17 sichern die Positionierung des Mitnehmers 2 auf der nicht gezeigten Spindel des Spindelantriebs.

## Patentansprüche

1. Bremsmodul (1) für ein Antriebssystem, insbesondere für Fahrzeugklappen, umfassend mindestens eine Anlaufscheibe (4) und mindestens eine Bremsscheibe (3), wobei die mindestens eine Anlaufscheibe (4) und die mindestens eine Bremsscheibe (3) jeweils mindestens eine Reibfläche aufweisen, die im Bremsbetrieb aneinander reiben, wobei die Bremsscheibe (3) einteilig aus einem Kunststoff ausgebildet ist und in der wenigstens einen Reibfläche eine Anzahl von Vertiefungen (18) zur Aufnahme eines Schmiermittels aufweist, **dadurch gekennzeichnet, dass** das Bremsmodul (1) je eine Anlaufscheibe (4) auf zwei gegenüberliegenden Seiten der Bremsscheibe (3) umfasst, wobei die Bremsscheibe (3) je eine jeder der Anlaufscheiben (4) zugewandte Reibfläche aufweist.

2. Bremsmodul (1) nach Anspruch 1, **dadurch gekennzeichnet, dass** mindestens eine Anlaufscheibe (4) aus, bevorzugt nicht-nitriertem, Chrom-5-Stahl besteht.

3. Bremsmodul (1) nach einem der Ansprüche 1 oder 2, **dadurch gekennzeichnet, dass** die Bremsscheibe (3) ringförmig ist und bevorzugt eine zentrale Ausnehmung aufweist, wobei die zentrale Ausnehmung einen näherungsweise kreisförmigen Querschnitt mit mindestens zwei durch Aussparungen (13) getrennten Zahnabschnitten (12) aufweist.

4. Bremsmodul (1) nach einem der Ansprüche 1 bis 3, **dadurch gekennzeichnet, dass** das Bremsmodul (1) ein Gehäuse (6) umfasst, in dem die Bremsscheibe (3) und die mindestens eine Anlaufscheibe (4), bevorzugt koaxial um eine zentrale Achse, geführt sind, wobei das Bremsmodul (1) eine Deckscheibe (7) umfasst, welche durch eine Rastverbindung, mit dem Gehäuse (6) derart verbunden ist, dass die Bremsscheibe (3) und die mindestens eine Anlaufscheibe (4) im Gehäuse (6) gehalten sind.

5. Bremsmodul (1) nach Anspruch 4, **dadurch gekennzeichnet, dass** das Gehäuse (8) eine Anzahl von Gehäuseschlitzen (10) umfasst, deren Schlitzlängsachse parallel zu der Längsachse des Antriebssystems ausgerichtet ist, wobei zumindest eine Anlaufscheibe (4) radial von der Längsachse nach außen gerichtete Anlaufscheibenvorsprünge (11) aufweist, die komplementär zu den Gehäuseschlitzen (10) geformt sind, sodass die Gehäuseschlitze (10) und die Anlaufscheibenvorsprünge (11) gegen eine Verdrehung der Anlaufscheibe (4) gegenüber dem Gehäuse (6) um die Längsachse formschlüssig zusammenwirken.

6. Antriebssystem, insbesondere für eine Fahrzeugklappe, umfassend ein Bremsmodul (1) nach einem der vorstehenden Ansprüche.

7. Antriebssystem nach Anspruch 6, **dadurch gekennzeichnet, dass** das Antriebssystem ein elektrischer Spindelantrieb ist.

## Claims

1. A brake module (1) for a drive system, in particular for vehicle hatches, comprising at least one thrust washer (4) and at least one brake disk (3), the at least one thrust washer (4) and the at least one brake disk (3) each comprising at least one friction surface, which each rub against one another during braking operation, the brake disk (3) being formed in one piece from a plastics material and comprising a number of depressions (18) in the at least one friction surface for receiving a lubricant, **characterized in that** the brake module (1) comprises a thrust washer (4) on each of two opposite sides of the brake disk (3), the brake disk (3) comprising a friction surface facing each of the thrust washers (4).

2. The brake module (1) according to any of claims 1, **characterized in that** at least one thrust washer (4) consists of preferably non-nitrided chromium-5 steel.

3. The brake module (1) according to any of claims 1 or 2, **characterized in that** the brake disk (3) is annular and preferably comprises a central cut-out, the central cut-out having an approximately circular cross section comprising at least two tooth portions (12) separated by recesses (13).

4. The brake module (1) according to any of claims 1 to 3, **characterized in that** the brake module (1) comprises a housing (6) in which the brake disk (3) and the at least one thrust washer (4) are preferably guided coaxially about a central axis, the brake module (1) comprising a cover disk (7) which is connected to the housing (6) by a latching connection such that the brake disk (3) and the at least one thrust washer (4) are held in the housing (6).

5. The brake module (1) according to claim 4, **characterized in that** the housing (8) comprises a number of housing slots (10), of which the longitudinal slot axis is oriented in parallel with the longitudinal axis of the drive system, at least one thrust washer (4) comprising thrust-washer projections (11) which are directed radially outward from the longitudinal axis and are shaped to be complementary to the housing slots (10), such that the housing slots (10) and the thrust-washer projections (11) interact in a form-fitting manner against rotation of the thrust washer (4) relative to the housing (6) about the longitudinal axis.

6. A drive system, in particular for a vehicle hatch, comprising a brake module (1) according to any of the preceding claims.

7. The drive system according to claim 6, **characterized in that** the drive system is an electrical spindle drive.

## Revendications

1. Module de freinage (1) pour un système d'entraînement, en particulier pour des trappes de véhicule, comprenant au moins une plaque de butée (4) et au moins un disque de frein (3), dans lequel ladite au moins une plaque de butée (4) et ledit au moins un disque de frein (3) présentent respectivement au moins une surface de friction qui frottent l'une contre l'autre lors du fonctionnement de freinage, dans lequel le disque de frein (3) est réalisé d'une seule pièce en une matière plastique et présente dans ladite au moins une surface de friction un nombre de creux (18) pour recevoir un lubrifiant,
**caractérisé en ce que** le module de freinage (1) comprend respectivement une plaque de butée (4) sur deux faces opposées du disque de frein (3), le disque de frein (3) présentant respectivement une surface de friction tournée vers chacune des plaques de butée (4).

2. Module de freinage (1) selon la revendication 1, **caractérisé en ce qu'**au moins une plaque de butée (4) est composée d'acier au chrome 5, de préférence non nitruré.

3. Module de freinage (1) selon l'une quelconque des revendications 1 ou 2, **caractérisé en ce que** le disque de frein (3) est annulaire et présente de préférence un évidement central, l'évidement central présentant une section transversale approximativement circulaire muni d'au moins deux sections dentées (12) séparées par des dégagements (13).

4. Module de freinage (1) selon l'une quelconque des revendications 1 à 3, **caractérisé en ce que** le module de freinage (1) comprend un carter (6) dans lequel le disque de frein (3) et ladite au moins une plaque de butée (4) sont guidés de préférence de manière coaxiale autour d'un axe central, le module de freinage (1) comprenant un disque de recouvrement (7) qui est relié au carter (6) par une liaison par encliquetage de telle sorte que le disque de frein (3) et ladite au moins une plaque de butée (4) sont maintenus dans le carter (6).

5. Module de freinage (1) selon la revendication 4, **caractérisé en ce que** le carter (8) comprend un nombre de fentes de carter (10) dont l'axe longitudinal de fente est orienté en parallèle à l'axe longitudinal du système d'entraînement, dans lequel au moins une plaque de butée (4) présente des saillies de plaque de butée (11) orientées radialement de l'axe longitudinal vers l'extérieur qui sont formées de manière complémentaire aux fentes de carter (10) de sorte que les fentes de carter (10) et les saillies de plaque de butée (11) coopèrent par complémentarité de forme contre une torsion de la plaque de butée (4) par rapport au carter (6) autour de l'axe longitudinal.

6. Système d'entraînement, en particulier pour une trappe de véhicule, comprenant un module de freinage (1) selon l'une quelconque des revendications précédentes.

7. Système d'entraînement selon la revendication 6, **caractérisé en ce que** le système d'entraînement est un entraînement à vis électrique.
